# EUROPÄISCHE PATENTSCHRIFT

(11) **EP 2 648 934 B1**
(45) Veröffentlichungstag und Bekanntmachung des Hinweises auf die Patenterteilung: **13.01.2021**
(21) Anmeldenummer: 11788510.3
(22) Anmeldetag: 30.11.2011
(51) Int. Cl.: B60L 53/80, B60S 5/06, B60L 53/65, B60L 53/60, B60K 1/04, B60L 3/00, B60L 50/60

(54) **SICHERHEITSSYSTEM SOWIE VERFAHREN ZUM BETREIBEN EINES SICHERHEITSSYSTEMS**
SECURITY SYSTEM AND METHOD FOR OPERATING A SECURITY SYSTEM
SYSTÈME DE SÉCURITÉ ET PROCÉDÉ DE FONCTIONNEMENT D'UN SYSTÈME DE SÉCURITÉ

(30) Priorität: 09.12.2010 DE 102010061143
(43) Veröffentlichungstag der Anmeldung: 16.10.2013
(73) Patentinhaber: Huf Hülsbeck & Fürst GmbH & Co. KG, 42551 Velbert (DE)
(72) Erfinder: MONTAG, Patrick, 45219 Essen (DE); SIMON, Jörg, 42489 Wülfrath (DE); SCHUMACHER, Helmut, 48653 Coesfeld (DE); HILD, Sven, 58089 Hagen (DE)
(74) Vertreter: Vogel, Andreas
(86) Internationale Anmeldenummer: PCT/EP2011/071344
(87) Internationale Veröffentlichungsnummer: WO 2012/076374

(56) Entgegenhaltungen:
- EP-A1- 2 159 362
- EP-A2- 0 985 596
- CN-Y- 201 217 383
- DE-A1-102007 032 210
- DE-A1-102007 041 288
- DE-A1-102008 063 366
- DE-T2- 69 220 228
- DE-U1-202005 020 140
- GB-A- 2 298 300
- SU-A1- 1 224 392
- US-A- 5 815 824
- US-A1- 2010 220 406

## Beschreibung

Die Erfindung betrifft ein Sicherheitssystem mit einer Verriegelungsvorrichtung für mindestens eine Akkumulatoreinheit eines Kraftfahrzeuges, wobei die Verriegelungsvorrichtung in einen Entriegelungszustand und einen Verriegelungszustand bringbar ist, in dem Verriegelungszustand die Akkumulatoreinheit am Kraftfahrzeug unlösbar angeordnet ist und in dem Entriegelungszustand die Akkumulatoreinheit vom Fahrzeug entfernbar ist. Zudem bezieht sich die Erfindung auf ein Verfahren zum Betreiben eines zuvor genannten Sicherheitssystems.

In der DE 26 57 225 A1 ist ein Fahrzeug offenbart, welches elektrisch über ein Batteriepaket angetrieben wird. Das Batteriepaket befindet sich innerhalb des Kraftfahrzeuges, und ist herausnehmbar. Damit das Batteriepaket zuverlässig am Fahrzeug gehalten ist, sind Verriegelungselemente vorgesehen, die jeweils am Batteriepaket bzw. an einem Teil des Kraftfahrzeuges angeordnet sind. Es hat sich herausgestellt, dass die Batteriepakete, auch im Folgenden Akkumulatoreinheiten genannt, sehr kostspielig sind, so dass die Notwendigkeit besteht, diese Akkumulatoreinheiten bezogen auf potenzielle Diebstähle besonders im oder am Fahrzeug zu sichern. Die im genannten Stand der Technik gezeigte Vorrichtung ist hinsichtlich eines möglichen Diebstahls bezogen auf die Akkumulatoreinheit besonders anfällig.

Ebenfalls ist ein Sicherheitssystem mit einer Verriegelungsvorrichtung in den Schriften EP 0 985 596 A2, CN 201 217 383 Y, SU 1 224 392 A1, GB 2 298 300 A, US 2010/220406 A1, US 5,815,824 A, DE 20 2005 020 140 U1, DE 10 2007 041 288 A1 offenbart. Ferner offenbaren die Schriften EP 2 159 362 A1 und DE 10 2008 063 366 A1 ein Kraftfahrzeug mit einer Einrichtung zum selbstständigen Öffnen einer Klappe am Kraftfahrzeug. Die Schrift DE 10 2007 032 210 A1 offenbart ein Verfahren zum Austausch von Akkumulatoren für Elektrofahrzeuge.

Der Erfindung liegt die Aufgabe zugrunden, ein Sicherheitssystem für eine Akkumulatoreinheit eines Kraftfahrzeuges bereitzustellen, bei dem höhere Sicherheitsanforderungen bzgl. eines Diebstahls der Akkumulatoreinheit geschaffen werden. Gleichzeitig soll ein Austausch der Akkumulatoreinheit für den Benutzer möglichst einfach sein.

Die vorliegende Aufgabe wird gelöst durch den Vorrichtungsanspruch 1 und durch den Verfahrensanspruch 8.

Dazu ist erfindungsgemäß vorgesehen, dass ein ID-Geber vorgesehen ist, der zur Authentifizierungsabfrage mit dem Kraftfahrzeug dient, und nur bei einer positiven Authentifizierung die Verriegelungsvorrichtung ihren Zustand ändert. Hierdurch wird bewirkt, dass lediglich die berechtigte Person die Verriegelungsvorrichtung aus ihrem Verriegelungszustand in den Entriegelungszustand und umgekehrt bringen kann.

Das Sicherheitssystem kann beispielsweise über ein Wecksignal und über eine Überprüfung von Identifikationsdatensignalen die genannte Authentifizierungsabfrage durchführen. In der Regel trägt der ID-Geber die Identifikationsdaten, die zum Kraftfahrzeug gesendet werden. Kraftfahrzeugseitig werden anschließend die Identifikationsdaten überprüft. Falls eine positive Authentifizierung vorliegt, wird die Verriegelungsvorrichtung entsprechend angesteuert oder aktiviert, um einen Zustandswechsel vom Entriegelungszustand zum Verriegelungszustand und/oder umgekehrt durchzuführen. Vorzugsweise erfolgt eine bidirektionate Kommunikation zwischen dem ID-Geber und dem Kraftfahrzeug. Hierbei weist der ID-Geber eine Sende- und Empfangseinheit auf. Auch das Kraftfahrzeug weist eine entsprechende Sende- und Empfangseinheit auf, um eine Kommunikation mit dem ID-Geber zu schaffen. Vorzugsweise weist das Kraftfahrzeug eine Steuereinheit auf, die mit der Bordelektronik verbunden ist. Die Steuereinheit kann vorzugsweise den Authentifizierungsvorgang bzw. die Authentifizierungsabfrage durchführen. Hierbei kann die Steuereinheit unmittelbar in der Verriegelungsvorrichtung, in der Akkumulatoreinheit oder an einer weiteren relevanten Stelle des Kraftfahrzeuges angeordnet sein. Falls die Authentifizierung negativ sein sollte, erfolgt keine Änderung des Zustandes der Verriegelungsvorrichtung. Somit wird wirksam verhindert, dass unberechtigte Personen die Verriegelungsvorrichtung in den Entriegelungszustand bringen, wodurch die Akkumulatoreinheit auf einfache Weise vor Diebstahl wirksam geschützt werden kann. Bei dem Kraftfahrzeug handelt es sich vorzugsweise um ein Elektrofahrzeug.

Vorteilhafterweise kann ein Auslöseelement vorgesehen sein, das zur Authentifizierungsabfrage aktivierbar ist, wobei das Auslöseelement am Kraftfahrzeug und/oder am ID-Geber angeordnet ist. Der Bediener muss lediglich das Auslöseelement aktivieren, um die Verriegelungsvorrichtung entsprechend anzusprechen. Es ist beispielsweise denkbar, dass das Auslöseelement durch den Benutzer berührt oder manuell betätigt wird, beispielsweise, dass das Auslöseelement bewegt oder als Schalter gedrückt wird, wodurch die Authentifizierungsabfrage in Gang gesetzt wird. Selbstverständlich ist es ebenfalls denkbar, dass eine Annäherung an das Auslöseelement ausreicht, um die Authentifizierungsabfrage zu starten. Das Auslöseelement kann sowohl am ID-Geber als auch kraftfahrzeugseitig, insbesondere an der Verriegelungsvorrichtung oder an der Akkumulatoreinheit angeordnet sein. Neben dem erhöhten Bedienkomfort wird gleichzeitig die Zugangssicherheit zur Akkumulatoreinheit erhöht.

In einer weiteren die Erfindung verbessernden Maßnahme kann nach der Aktivierung des fahrzeugseitigen Auslöseelementes ein Wecksignal zum ID-Geber weitergeleitet werden, wobei vorteilhafterweise eine Überprüfung innerhalb des ID-Gebers ebenfalls durchgeführt werden kann. Der ID-Geber sendet auf das Wecksignal hin über eine Sendeeinrichtung ein Antwortsignal in Form von Identifikationsdatensignalen als codierte Nachricht an das Kraftfahrzeug zurück, die insbesondere durch die kraftfahrzeugseitige Empfangseinrichtung empfangen werden und der fahrzeugseitigen Steuereinheit oder Bordelektronik weitergeleitet werden. Wenn die gesendeten Identifikationsdaten des ID-Gebers mit den kraftfahrzeugseitigen, feststehenden Identifikationsdaten übereinstimmen, liegt eine positive Authentifizierung vor, so dass die Verriegelungsvorrichtung ihren Zustand wechselt, insbesondere vom Verriegelungszustand in den Entriegelungszustand oder umgekehrt wechselt.

Vorteilhafterweise kann das Auslöseelement auch am ID-Geber vorgesehen sein, wobei der Benutzer nach einer entsprechenden Betätigung des Auslöseelementes die Authentifizierungsabfrage startet.

Vorteilhafterweise kann der ID-Geber mit einem schlüssellos wirkenden Zugangs- und/oder Fahrberechtigungskontrollsystems des Kraftfahrzeuges in Signalverbindung bringbar sein. Das bedeutet, dass der ID-Geber gleichzeitig wesentlicher Bestandteil einer Wegfahrsperre, Zentralverriegelung, etc. eines Kraftfahrzeuges sein kann. Der ID-Geber kann in einem Activ-Entry oder Passive-Entry Zugangs- und/oder Fahrberechtigungskontrollsystems des Kraftfahrzeuges seinen Einsatz finden. Hierbei weist der ID-Geber entsprechende Identifikationsdaten auf, die ebenfalls in einer Authentifizierung mit dem Kraftfahrzeug überprüft werden, wobei bei einer positiven Authentifizierung ein Zugang in das Kraftfahrzeug ermöglicht wird bzw. der Benutzer den Kraftfahrzeugmotor starten kann. Vorteilhafterweise ist das Zugangs- und Fahrberechtigungskontrollsystem mit einem Schließsystem verbunden, welches unter Anderem die Kraftfahrzeugtüren, Heckklappe, etc. verriegeln und entriegeln kann. Nach einer positiven Authentifizierung erfolgt eine Entriegelung der Kraftfahrzeugtür und/oder der Heckklappe, so dass der Benutzer die Tür, Heckklappe aktiv öffnen kann. Zweckmäßigerweise kann die Authentifizierung für das Schließsystem separat von der Authentifizierung der Verriegelungsvorrichtung für die Akkumulatoreinheit erfolgen. Das Auslöseelement für die Authentifizierung bezogen auf das Schließsystem kann ein Anderes sein als das Auslöseelement für die Authentifizierung bezogen auf die Verriegelungsvorrichtung der Akkumulatoreinheit. Jedoch ist ebenfalls denkbar, dass in einer weiteren Alternative lediglich ein Auslöseelement für beide Authentifizierungsvorgänge zum Einsatz kommt. Denkbar ist, dass beispielsweise durch unterschiedliche Handlungen des Benutzers am genannten Auslöseelement der eine oder der andere Authentifizierungsvorgang gestartet wird. Beispielsweise ist es denkbar, dass eine zeitlich kurze Aktivierung des Auslöseelementes und eine zeitlich längere Aktivierung des gleichen Auslöseelementes den einen oder anderen Authentifizierungsvorgang auslösen kann.

In einer weiteren die Erfindung verbessernden Maßnahme kann die Akkumulatoreinheit in Signalverbindung mit dem Bordnetz des Kraftfahrzeuges und/oder mit dem ID-Geber stehen, so dass der Ladezustand (SOC) und/oder der Verschleiß (SOH) der Akkumulatoreinheit am Kraftfahrzeug und/oder am ID-Geber für den Benutzer anzeigbar ist. Hierbei kann beispielsweise eine Messelektronik zum Einsatz kommen, die den Strom, Temperatur, Spannung der am Kraftfahrzeug sich befindenden Akkumulatoreinheit misst und/oder ermittelt. Diese Messelektronik kann beispielsweise am Kraftfahrzeug angeordnet sein. Ebenfalls ist es denkbar, dass die Akkumulatoreinheit als solche diese Messelektronik umfasst und die entsprechenden Informationen, wie Ladezustand, Verschleiß, Strom, Temperatur, Spannung der fahrzeugseitigen Steuereinheit, Bordelektronik weitergeleitet werden. Vorteilhafterweise kann über eine Messung des Stromes, Temperatur, Spannung der Akkumulatoreinheit der Ladezustand (SOC) oder der "Verschleiß" (SOH) der Akkumulatoreinheit berechnet werden. Die fahrzeugseitige Steuereinheit kann über eine entsprechende Logik verfügen, die dem Benutzer mitteilen, inwieweit die Akkumulatoreinheit auszutauschen ist. Ebenfalls ist es denkbar, dass die Bordelektronik oder der ID-Geber dem Benutzer mitteilt, welche Distanz das Kraftfahrzeug bezogen auf den Ladezustand der Akkumulatoreinheit noch fahren kann. Die Wiedergabe dieser Information kann vorteilhafterweise visuell erfolgen.

Vorteilhafterweise ist die Akkumulatoreinheit über eine entsprechende Schnittstelle mit der Bordelektronik des Kraftfahrzeuges verbunden. Die Schnittstelle befindet sich vorteilhafterweise an der Verriegelungsvorrichtung. Die Akkumulatoreinheit kann über ein Bussystem mit der fahrzeugseitigen Steuereinheit, Bordelektronik sowie mit dem Zugangs- und/oder Fahrberechtigungskontrollsystem verbunden sein. Die Daten zwischen den jeweiligen Peripheriegeräten können über einen Adressbus oder Steuerbus erfolgen. Vorteilhafterweise kann auch ein Datenbus zum Einsatz kommen, der eine bidirektionale Kommunikation zwischen den Peripheriegeräten wie Akkumulatoreinheit, Steuereinheit, Bordelektronik etc. sicherstellt.

In einer weiteren Ausführungsform der Erfindung kann die Verriegelungsvorrichtung eine mechanische, eine elektromechanische und/oder eine mechatronische Wirkungsweise aufweisen. Z. B. kann die Verriegelungsvorrichtung einen Antrieb umfassen, der dafür sorgt, dass ein Wechsel zwischen dem Entriegelungszustand und dem Verriegelungszustand möglich ist. Der Antrieb kann beispielsweise ein Verriegelungselement bewegen, das im Verriegelungszustand die Akkumulatoreinheit sichert und im Entriegelungszustand ein einfaches Herausnehmen der Akkumulatoreinheit vom Kraftfahrzeug ermöglicht.

Erfindungsgemäß kann das Kraftfahrzeug eine Aufnahme aufweisen, in die die Akkumulatoreinheit einbringbar ist. Hierbei kann die Aufnahme zum Einen außenseitig am Kraftfahrzeug angeordnet sein. Alternativ ist es möglich, dass die Aufnahme innenseitig innerhalb des Kraftfahrzeuges sich befindet.

Erfindungsgemäß kann vorgesehen sein, dass die Verriegelungsvorrichtung an der Akkumulatoreinheit und/oder am Kraftfahrzeug angeordnet ist. Vorteilhafterweise kann die Verriegelungsvorrichtung an der Aufnahme oder in der Aufnahme angeordnet sein, um die Akkumulatoreinheit sicher am Kraftfahrzeug zu halten und gleichzeitig vor einem Diebstahl zu schützen. Zweckmäßigerweise können Bestandteile der Verriegelungsvorrichtung zum Einen an der Akkumulatoreinheit und weitere Bestandteile der Verriegelungsvorrichtung kraftfahrzeugseitig vorgesehen sein. Die Aufnahme kann zum Einen als Einbuchtung am Kraftfahrzeug ausgeführt sein, um die Akkumulatoreinheit zuverlässig aufnehmen zu können. Vorteilhafterweise ist die Geometrie der Einbuchtung der Geometrie der Akkumulatoreinheit entsprechend angepasst. In einer weiteren Ausführungsform der Erfindung kann die Aufnahme zum Anderen als definierte Fläche oder Kontur ausgebildet sein, um eine Befestigung der Akkumulatoreinheit zu gewährleisten.

In einer vorteilhaften Ausführungsform kann die Aufnahme unterhalb des Kraftfahrzeuges angeordnet sein, insbesondere zwischen der Vorder- und der Hinterachse des Kraftfahrzeuges. Alternativ kann die Aufnahme vor der Vorderachse oder hinter der Hinterachse vorgesehen sein. Im Falle der außenseitigen Aufnahme ist es vorteilhaft, dass die Akkumulatoreinheit vor äußeren Einflüssen wie Schmutz, Feuchtigkeit, etc. geschützt ist. Die Aufnahme kann ebenfalls innerhalb des Kraftfahrzeuges positioniert sein. Beispielsweise kann die Aufnahme innerhalb des Kofferraumes, unterhalb der Motorhaube oder innerhalb der Fahrgastzelle vorgesehen sein.

Ferner wird die Aufgabe durch ein Verfahren gemäß des unabhängigen Verfahrensanspruches gelöst. Vorteilhafte Ausführungsformen sind in den abhängigen Verfahrensansprüchen aufgeführt. Vorteilhafterweise ist ein Verfahren zum Betreiben eines Sicherheitssystems mit einer Verriegelungsvorrichtung für mindestens eine Akkumulatoreinheit eines Kraftfahrzeuges vorgesehen, wobei die Verriegelungsvorrichtung in einen Entriegelungszustand und einen Verriegelungszustand bringbar ist, in dem Verriegelungszustand die Akkumulatoreinheit am Kraftfahrzeug unlösbar angeordnet ist und in dem Entriegelungszustand die Akkumulatoreinheit vom Fahrzeug entfernbar ist. Erfindungsgemäß ist ein ID-Geber vorgesehen, der zur Authentifizierungsabfrage mit dem Kraftfahrzeug dient, wobei nur bei einer positiven Authentifizierung die Verriegelungsvorrichtung ihren Zustand ändert.

Vorteilhafterweise kann über eine bewusste Aktivierung eines Auslöseelementes die Authentifizierungsabfrage aktiviert werden, wobei das Auslöseelement am Kraftfahrzeug oder am ID-Geber angeordnet ist. Die bewusste Aktivierung kann über eine Annäherung, Berührung oder Bewegung des Auslöseelementes ausgelöst werden. Z. B. kann die Authentifizierungsabfrage kapazitiv und/oder induktiv erfolgen. Der ID-Geber kann sich in einem Kleidungsstück des Benutzers oder sogar in einem Koffer oder dergleichen befinden, der von dem Benutzer getragen wird, ohne dass Störungen während der Aussendung von Identifikationsdatensignalen zur Authentifizierungsabfrage auftreten. Der Einsatz eines Sensors als Auslöseelement ist von Vorteil, der beispielsweise als Kapazitivsensor, Induktivsensor, Piezosensor ausgeführt sein kann.

In einer weiteren die Erfindung verbessernden Maßnahme kann ein im Kraftfahrzeug integriertes Navigationssystem vorhanden sein, wobei eine vom Benutzer geplante Route im Navigationssystem in Bezug auf den Ladezustand der Akkumulatoreinheit überprüft wird, und falls der aktuelle Ladezustand geringer ist als der für die genannte Route benötigte Ladezustand, erfolgt eine entsprechende Benachrichtigung an den Benutzer.

Erfindungsgemäß kann eine intelligente Sensorik zur Aktivierung der Authentifizierungsabfrage kraftfahrzeugseitig vorgesehen sein, die mindestens einen Sensor oder mehrere Sensoren umfasst, wobei insbesondere der erste Sensor einen horizontalen Detektionsbereich und der zweite Sensor einen vertikalen Detektionsbereich aufweist, wobei die Sensorik mit einem Zugangs- und/oder Fahrberechtigungskontrollsystems verbunden ist. Der oder die Sensoren können als Sensorelektrode/Sensorelektroden ausgebildet sein. Hierbei können die Sensoren selbst eine Sensorelektronik besitzen, die für eine hinreichend große Ladung auf den Sensorelektroden sorgt. Beispielsweise ist es denkbar, dass der Sensor oder die Sensoren als kapazitive Sensoren ausgebildet sind. Je nach Stärke der kapazitiven Kopplung zwischen der Sensorelektrode und der Umgebung bildet sich die jeweilige Ladung auf der Sensorelektrode aus. Nähert sich z. B. eine Person oder ein Gegenstand dem Sensor oder den Sensoren, so kann mehr Ladung auf der Sensorelektrode/Sensorelektroden aufgebracht werden. Diese Ladung kann z. B. auf der Sensorelektrode in einen in der Elektronik befindlichen Referenzkondensator umgeladen werden. Durch häufiges Wiederholen dieses Vorganges (Laden der Sensorelektrode, Umladen auf Referenzkondensator) kann sich die Ladung auf dem Referenzkondensator akkumulieren, dessen aufsummierte Ladung dann zu einer nutzbaren Signalauswertung herangezogen wird.

Eine Aufsummierung der Ladung kann z. B. durch die Sensoren gemessen werden. In Abhängigkeit der Ladung auf der Oberfläche der Sensorelektrode kann ein Rückschluss gefunden werden, welche Änderung der Entfernung der Person zum Kraftfahrzeug vorliegt. Eine derartige intelligente Sensorik besitzt eine sehr niedrige Stromaufnahme, so dass eine dauerhafte Überwachung sowohl des horizontalen Detektionsbereiches und/oder des vertikalen Detektionsbereiches am Kraftfahrzeug möglich ist.

Erfindungsgemäß kann eine Sensorelektrode als flächenförmiges Element ausgebildet sein, wobei am Kraftfahrzeug vor der Vorderachse, zwischen der Vorderachse und der Hinterachse oder hinter der Hinterachse das flächenförmige Element angeordnet sein kann. Beispielsweise ist eine Integration der Sensorelektrode in das Material der Karosserie des Kraftfahrzeuges denkbar.

Beispielsweise kann das flächenförmige Element als Drahtelement oder als Leiterfolie ausgebildet sein, wobei zusätzlich oder alternativ die Karosserie durch Aufdampfen oder Besputtern zur Bildung der Sensorelektrode ausgeführt sein kann.

In einer möglichen Ausführungsform der Erfindung weist die intelligente Sensorik einen Sensor auf, der den Benutzer bei stehendem Kraftfahrzeug durch seine Annäherung erkennt. Hierbei ist der Sensor derart konfiguriert, dass über ein definiertes

Bewegungsmuster, das der Benutzer ausführen muss, der Sensor aktiviert wird, wodurch gleichzeitig die Aktivierung der Authentifizierungsabfrage erfolgt. Das Bewegungsmuster kann beispielsweise über eine Bewegung der Hand, des Fußes etc. erfolgen.

Weiterhin kann vorgesehen sein, dass die intelligente Sensorik zwei Sensoren umfasst, wobei der erste Sensor, der einen horizontalen Detektionsbereich aufweist, die Annäherung des Benutzers erkennt. Der zweite Sensor, der einen vertikalen Detektionsbereich aufweist, kann beispielsweise die Bewegung des Fußes oder des Beines des Benutzers sensieren, wodurch der Benutzer den Wunsch signalisiert, dass die Verriegelungsvorrichtung für die Akkumulatoreinheit in den Entriegelungszustand gebracht werden soll. Erst wenn beide Sensoren entsprechend durch den Benutzer angesprochen werden, erfolgt die Authentifizierungsabfrage. Falls die Authentifizierungsabfrage positiv ist, wird die Verriegelungsvorrichtung aus dem Verriegelungszustand in den Entriegelungszustand und/oder umgekehrt gebracht.

Vorteilhafterweise kann die intelligente Sensorik zusätzlich für die Erfassung von seitlich vom Kraftfahrzeug fahrenden Nachbarkraftfahrzeugen einsetzbar sein, um Nachbarkraftfahrzeuge im toten Winkel zu detektieren. Bei dieser Ausführungsform der Erfindung kann beispielsweise über die Bordelektronik visuell und/oder akustisch dem fahrenden Benutzer im Kraftfahrzeug signalisiert werden, dass seitlich im toten Winkel ein Nachbarkraftfahrzeug sich befindet. Diese Benachrichtigung kann vorteilhafterweise erst dann dem Benutzer mitgeteilt werden, wenn der Blinker des Kraftfahrzeuges zuvor betätigt wurde.

In einer weiteren die Erfindung verbessernden Maßnahme kann eine intelligente Sensorik zur Aktivierung der Authentifizierungsabfrage kraftfahrzeugseitig vorgesehen sein, die mindestens einen Sensor oder mehrere Sensoren umfasst, wobei insbesondere der erste Sensor einen horizontalen Detektionsbereich und der zweite Sensor einen vertikalen Detektionsbereich aufweist, wobei die Sensorik mit einem Zugangs- und/oder Fahrberechtigungskontrollsystems verbunden ist und erst nach einer Sensierung der Person durch den ersten und den zweiten Sensor eine Authentifizierungsabfrage zwischen dem ID-Geber und dem Zugangs- und/oder Fahrberechtigungskontrollsystems vorgenommen wird, und bei einer positiven Authentifizierung die Verriegelungsvorrichtung angesteuert wird, um einen Wechsel des Zustandes auszuführen.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine rein schematische Ansicht auf ein Kraftfahrzeug mit einer Verriegelungsvorrichtung für eine Akkumulatoreinheit, wobei die Verriegelungsvorrichtung sich im Entriegelungszustand befindet,
- Figur 2: die Darstellung gemäß Figur 1, wobei die Verriegelungsvorrichtung sich im Verriegelungszustand befindet,
- Figur 3: eine weitere rein schematische Darstellung bezüglich des erfindungsgemäßen Sicherheitssystems mit einer Verriegelungsvorrichtung für eine Akkumulatoreinheit und
- Figur 4: eine weitere Ausführungsform des Sicherheitssystems mit einer Verriegelungsvorrichtung für eine Akkumulatoreinheit.

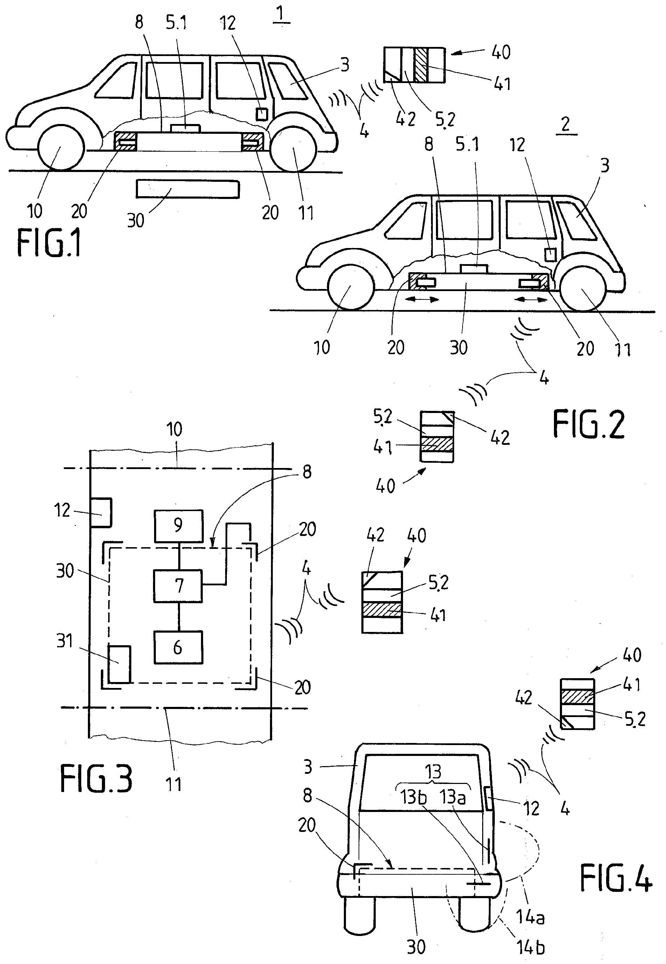

In Figur 1 und Figur 2 ist ein Kraftfahrzeug 3 gezeigt, welches eine Aufnahme 8 aufweist, in der eine Akkumulatoreinheit 30 aufgenommen werden kann. Die Akkumulatoreinheit 30 versorgt das Kraftfahrzeug mit der notwendigen Energie. Hierbei handelt es sich bei dem vorliegenden Kraftfahrzeug 3 um ein Elektrokraftfahrzeug. Damit die Akkumulatoreinheit 30 zuverlässig in der Aufnahme 8 gehalten und gesichert ist, ist eine Verriegelungsvorrichtung 20 am Kraftfahrzeug 3 vorgesehen, die zwischen einem Entriegelungszustand 1 (siehe Figur 1) und einem Verriegelungszustand 2 (siehe Figur 2) gebracht werden kann.

Die Aufnahme 8 befindet sich außenseitig, insbesondere an der Unterseite des Kraftfahrzeuges 3, insbesondere zwischen der Vorderachse 10 und der Hinterachse 11. Da die Akkumulatoreinheit 30 ein kostspieliges Elektrobauteil ist, wird die Akkumulatoreinheit 30 von der Verriegelungsvorrichtung 20 derart gesichert, dass ein Diebstahl der Akkumulatoreinheit 30 nahezu ausgeschlossen ist. Im Verriegelungszustand 2 greifen Arretierungsmittel derart in die Akkumulatoreinheit 30 ein, so dass ein Diebstahl der Akkumulatoreinheit 30 nahezu unmöglich ist. Hierbei kann die Verriegelungsvorrichtung 20 eine mechanische, eine elektromechanische und/oder eine mechatronische Wirkungsweise aufweisen. Ein Teil der Verriegelungsvorrichtung 20 kann hierbei am Kraftfahrzeug 3 und ein weiterer Teil der Verriegelungsvorrichtung 20 kann an der Akkumulatoreinheit 30 angeordnet sein.

Um die Verriegelungsvorrichtung 20 aus dem Verriegelungszustand 2 gemäß Figur 2 in den Entriegelungszustand 1 gemäß Figur 1 zu bringen, ist ein ID-Geber 40 vorgesehen. Über eine Betätigung des Auslöseelementes 5.2 am ID-Geber 40 sendet die Sende- und Empfangseinheit 42 ein codiertes Signal an das Kraftfahrzeug 3. Das Kraftfahrzeug 3 weist eine Sende- und Empfangseinheit 12 auf, die dieses Signal empfängt. Zwischen dem Kraftfahrzeug 3 und dem ID-Geber 40 erfolgt somit eine Authentifizierungsabfrage 4, um festzustellen, inwieweit der Benutzer mit seinem ID-Geber 40 die berechtigte Person ist, um die Verriegelungsvorrichtung 20 zwischen dem Entriegelungszustand 1 und dem Verriegelungszustand 2 zu bringen. Falls die Authentifizierungsabfrage 4 positiv ist, erfolgt ein Zustandswechsel der Verriegelungsvorrichtung 20 in den Entriegelungszustand 2, so dass die Akkumulatoreinheit 30 aus der Aufnahme 8 des Kraftfahrzeuges 3 entnommen werden kann. Da die Akkumulatoreinheit 30 in der Regel großflächig und ein hohes Eigengewicht aufweist, wird die Entnahme der Akkumulatoreinheit 30 über Hilfswerkzeuge etc. erfolgen. Hierbei ist die Verriegelungsvorrichtung 20 derart ausgestaltet, dass im Entriegelungszustand 1 die Akkumulatoreinheit 30 stets in der Aufnahme 8 zuverlässig gehalten ist, ohne dass die Gefahr besteht, dass die Akkumulatoreinheit 30 aus der Aufnahme 8 selbstständig fällt.

Ebenfalls ist es denkbar, dass ein Auslöseelement 5.1 kraftfahrzeugseitig vorgesehen ist, welches zur Authentifizierungsabfrage 4 zu aktivieren ist. Hierbei trägt der Benutzer lediglich den ID-Geber 20 mit sich und kann das Auslöseelement 5.1 durch eine Annäherung, Berührung oder Betätigung ansprechen, so dass eine Authentifizierungsabfrage 4 zwischen dem Kraftfahrzeug 3 und dem ID-Geber 40 gestartet wird. Ist die Authentifizierungsabfrage 4 positiv, erfolgt ein entsprechender Zustandswechsel der Verriegelungsvorrichtung 20. Die Authentifizierungsabfrage 4 kann ebenfalls über die Sende- und Empfangseinheiten 12, 42 erfolgen.

In Figur 3 ist schematisch gezeigt, dass der ID-Geber 40 aus Figur 1 und Figur 2 auch mit einem schlüssellos wirkenden Zugangs- und Fahrberechtigungskontrollsystem 6 des Kraftfahrzeuges in Signalverbindung stehen kann. Das Zugangs- und Fahrberechtigungskontrollsystem 6 wirkt hierbei mit einem Schließsystem des Kraftfahrzeuges 3 zusammen, bei dem der Benutzer mit seinem ID-Geber 40 das Kraftfahrzeug 3 verriegeln und/oder entriegeln kann, um anschließend in das Kraftfahrzeug 3 zu steigen bzw. das Kraftfahrzeug zu verriegeln. Der ID-Geber 40 kann hierbei in einem Active-Entry oder Passive-Entry Zugangs- und Fahrberechtigungskontrollsystem des Kraftfahrzeuges zum Einsatz kommen. Hierbei kann die Authentifizierung für das Schließsystem über eine Betätigung einer Taste am ID-Geber 40 erfolgen, die nicht explizit gezeigt ist.

Gemäß Figur 3 kann die Akkumulatoreinheit 30 in Signalverbindung mit einem Bordnetz 7 des Kraftfahrzeuges 3 stehen. Ebenfalls kann eine Signalverbindung zwischen der Akkumulatoreinheit 30 und dem ID-Geber 40 bestehen. Somit ist der Ladezustand (SOC) und/oder der Verschleiß (SOH) der Akkumulatoreinheit 30 am Kraftfahrzeug 3 und/oder am ID-Geber 40 für den Benutzer anzeigbar. Der ID-Geber 40 kann beispielsweise ein Display 41 aufweisen, welches Auskunft über den Ladezustand der Akkumulatoreinheit 30 gibt. Auch das Cockpit des Kraftfahrzeuges 3 kann über ein Display verfügen, welches den Ladezustand des Akkumulators 30 dem Benutzer visualisiert.

Gemäß Figur 3 ist ein im Kraftfahrzeug 3 integriertes Navigationssystem 9 vorgesehen. Bei diesem Ausführungsbeispiel kommuniziert die Bordelektronik 7 mit der Akkumulatoreinheit 30 und dem Navigationssystem 9. Gemäß Figur 3 wird eine vom Benutzer geplante Route im Navigationssystem 9 in Bezug auf den Ladezustand der Akkumulatoreinheit 30 überprüft. Falls der aktuelle Ladezustand geringer ist als der für die genannte Route benötigte Ladezustand, erfolgt eine entsprechende Benachrichtigung an den Benutzer.

Ferner ist eine Messelektronik in Figur 1 bis Figur 4 denkbar, die exemplarisch in Figur 3 gezeigt ist. Die Messelektronik 31 kann den Strom, Temperatur, Spannung der Akkumulatoreinheit 30 messen und/oder ermitteln. Diese Messelektronik 31 ist in Figur 3 in der Akkumulatoreinheit 30 integriert. Die gemessenen und ermittelten Daten der Messelektronik 31 können dem Bordnetz 7 übermittelt werden. Ebenfalls ist es in einer nicht explizit dargestellten Variante möglich, dass die Messelektronik kraftfahrzeugseitig angeordnet ist.

In Figur 4 weist das Sicherheitssystem eine intelligente Sensorik 13 als Auslöseelement zur Aktivierung der Authentifizierungsabfrage 4 kraftfahrzeugseitig auf. Im vorliegenden Ausführungsbeispiel weist die Sensorik 13 einen ersten Sensor 13a und einen zweiten Sensor 13b auf. Der erste Sensor 13a weist einen horizontalen Detektionsbereich 14a auf. Der zweite Sensor 13b weist einen vertikalen Detektionsbereich 14b auf. Die Sensorik 13 ist gleichzeitig mit dem Zugangs- und Fahrberechtigungskontrollsystem 6 verbunden. Erst wenn eine Sensierung der sich nähernden Person durch den ersten Sensor 13a und den zweiten Sensor 13b erfolgt ist, erfolgt die Authentifizierungsabfrage 4 zwischen dem ID-Geber 40 und dem Kraftfahrzeug 3, insbesondere mit dem Zugangs- und Fahrberechtigungskontrollsystem 6. Erst bei einer positiven Authentifizierung wird die Verriegelungsvorrichtung 20 angesteuert, um einen Wechsel ihres Zustandes 1, 2 auszuführen. Die Authentifizierungsabfrage 4 erfolgt über Sende- und Empfangseinheiten 12, 42, die am Kraftfahrzeug 3 sowie am ID-Geber 40 angeordnet sind.

Gemäß Figur 4 wird somit die Authentifizierungsabfrage 4 erst dann ausgelöst, wenn der Benutzer sich an einem definierten Abstand innerhalb des horizontalen Detektionsbereiches 14a befindet. Zudem muss der Benutzer beispielsweise mit seinem Fuß in den vertikalen Detektionsbereich 14b gelangen, um auch den zweiten Sensor 13b zu aktivieren. Erst wenn beide Sensoren 13a, 13b über dieses definierte Bewegungsmuster angesprochen worden sind, erfolgt eine Aktivierung der Authentifizierungsabfrage 4.

Als Beispiel, das nicht Teil der Erfindung ist, ist es alternativ denkbar zu zwei Sensoren in der Sensorik 13, lediglich einen Sensor zu verwenden, um eine Aktivierung der Authentifizierungsabfrage 4 zu starten. Hierzu ist ebenfalls ein definiertes Bewegungsmuster für diesen einzelnen Sensor denkbar, um eine Aktivierung der Authentifizierungsabfrage 4 zu starten. Falls die Authentifizierungsabfrage 4 positiv ist, erfolgt eine Entriegelung der Verriegelungsvorrichtung 20, so dass die Akkumulatoreinheit 30 aus der Aufnahme 8 des Kraftfahrzeuges 3 entnommen werden kann.

Gemäß der Figuren 1 bis 4 können Akkumulatoreinheiten 30 am Kraftfahrzeug 3 ausgetauscht werden. Falls die neue, voll aufgeladene Akkumulatoreinheit 30 in die Aufnahme 8 des Kraftfahrzeuges 3 eingeführt und eingesetzt ist, kann das Sicherheitssystem derart ausgestaltet sein, dass über den ID-Geber 40 zunächst eine erneute Authentifizierungsabfrage erfolgt, um die Verriegelungsvorrichtung 20 in ihren Verriegelungszustand 2 zu bringen. Alternativ kann denkbar sein, dass bei der neu eingesetzten Akkumulatoreinheit 30 die Verriegelungsvorrichtung 20 automatisch in ihren Verriegelungszustand 2 fährt.

### Bezugszeichenliste

- 1: Entriegelungszustand
- 2: Verriegelungszustand
- 3: Kraftfahrzeug
- 4: Authentifizierungsabfrage
- 5: Auslöseelement
- 6: Zugangs- und Fahrberechtigungskontrollsystem
- 7: Bordnetz, Bordelektronik
- 8: Aufnahme
- 9: Navigationssystem
- 10: Vorderachse
- 11: Hinterachse
- 12: Sende- und/oder Empfangseinheit
- 13: Sensorik
- 13a: erster Sensor
- 13b: zweiter Sensor
- 14a: horizontaler Detektionsbereich
- 14b: vertikaler Detekionsbereich
- 20: Verriegelungsvorrichtung
- 30: Akkumulatoreinheit
- 31: Messelektronik
- 40: ID-Geber
- 41: Display
- 42: Sende- und/oder Empfangseinheit

## Patentansprüche

1. Sicherheitssystem mit einer Verriegelungsvorrichtung (20) für mindestens eine Akkumulatoreinheit (30) eines Elektrofahrzeuges (3), wobei
die Verriegelungsvorrichtung (20) in einen Entriegelungszustand (1) und einen Verriegelungszustand (2) bringbar ist,
in dem Verriegelungszustand (2) die Akkumulatoreinheit (30) am Elektrofahrzeug (3) unlösbar angeordnet ist,
in dem Entriegelungszustand (1) die Akkumulatoreinheit (30) vom Fahrzeug (3) entfernbar ist,
**dadurch gekennzeichnet,**
**dass** ein ID-Geber (40) vorgesehen ist, der zur Authentifizierungsabfrage (4) mit dem Elektrofahrzeug (3) dient, und
die Verriegelungsvorrichtung (20) ist eingerichtet nur bei einer positiven Authentifizierung ihren Zustand (1, 2) zu ändern, wobei eine intelligente Sensorik (13) zur Aktivierung der Authentifizierungsabfrage (4) kraftfahrzeugseitig, an der Verriegelungsvorrichtung (20) oder an der Akkumulatoreinheit (30) angeordnet, vorgesehen ist, die mindestens zwei Sensoren (13a, 13b) umfasst, wobei die Sensorik (13) eingerichtet ist erst bei einem definierten Bewegungsmuster, das von einem Benutzer auszuführen ist, eine Aktivierung der Authentifizierungsabfrage (4) auszulösen,
wobei der erste Sensor (13a) einen horizontalen Detektionsbereich (14a) und der zweite Sensor (13b) einen vertikalen Detektionsbereich (14b) aufweist, wobei die Sensorik (13) mit einem Zugangs- und/oder Fahrberechtigungskontrollsystem (6) verbunden ist, wobei die Sensoren (13a, 13b) als Sensorelektroden ausgebildet sind, wobei die Sensorelektroden als flächenförmige Elemente ausgebildet sind, wobei am Fahrzeug vor der Vorderachse, zwischen der Vorderachse und der Hinterachse oder hinter der Hinterachse die flächenförmigen Elemente anordbar sind, wobei das Kraftfahrzeug (3) eine Aufnahme (8) aufweist, in die die Akkumulatoreinheit (30) einbringbar ist, wobei die Aufnahme (8) außenseitig am Kraftfahrzeug (3) oder innenseitig innerhalb des Kraftfahrzeugs (3) vorgesehen ist, wobei im Verriegelungszustand (2) Arretierungsmittel in die Akkumulatoreinheit (30) eingreifen.

2. Sicherheitssystem nach Anspruch 1,
**dadurch gekennzeichnet,**
**dass** ein Auslöseelement (5) vorgesehen ist, das zur Authentifizierungsabfrage (4) aktivierbar ist, wobei das Auslöseelement (5) am Elektrofahrzeug oder am ID-Geber (40) angeordnet ist.

3. Sicherheitssystem nach Anspruch 1 oder 2,
**dadurch gekennzeichnet,**
**dass** der ID-Geber (40) mit einem schlüssellos wirkenden Zugangs- und/oder Fahrberechtigungskontrollsystems (6) des Elektrofahrzeuges (3) in Signalverbindung bringbar ist.

4. Sicherheitssystem nach einem der vorhergehenden Ansprüche,
**dadurch gekennzeichnet,**
**dass** die Akkumulatoreinheit (30) in Signalverbindung mit dem Bordnetz (7) des Elektrofahrzeuges (3) und/oder mit dem ID-Geber (40) steht, sodass der Ladezustand (SOC) und/oder der Verschleiß (SOH) der Akkumulatoreinheit (30) am Elektrofahrzeug (3) und/oder am ID-Geber (40) für den Benutzer anzeigbar ist.

5. Sicherheitssystem nach einem der vorhergehenden Ansprüche,
**dadurch gekennzeichnet,**
**dass** die Verriegelungsvorrichtung (20) eine mechanische, eine elektromechanische und/oder eine mechatronische Wirkungsweise aufweist.

6. Sicherheitssystem nach einem der vorhergehenden Ansprüche,
**dadurch gekennzeichnet,**
**dass** die Verriegelungsvorrichtung (20) an der Akkumulatoreinheit (30) und/oder am Elektrofahrzeug (3) angeordnet ist.

7. Sicherheitssystem nach einem der vorhergehenden Ansprüche,
**dadurch gekennzeichnet,**
**dass** die intelligente Sensorik (13) zusätzlich für die Erfassung von seitlich vom Elektrofahrzeug (3) fahrenden Nachbarkraftfahrzeugen einsetzbar ist, um Nachbarkraftfahrzeuge im toten Winkel zu detektieren.

8. Verfahren zum Betreiben eines Sicherheitssystems mit einer Verriegelungsvorrichtung (20) für mindestens eine Akkumulatoreinheit (30) eines Elektrofahrzeuges (3), wobei die Verriegelungsvorrichtung (20) in einen Entriegelungszustand (1) und einen Verriegelungszustand (2) bringbar ist,
in dem Verriegelungszustand (2) die Akkumulatoreinheit (30) am Elektrofahrzeug (3) unlösbar angeordnet ist,
in dem Entriegelungszustand (1) die Akkumulatoreinheit (30) vom Fahrzeug (3) entfernbar ist,
**dadurch gekennzeichnet,**
**dass** ein ID-Geber (40) vorgesehen ist, der zur Authentifizierungsabfrage (4) mit dem Elektrofahrzeug (3) dient, und
nur bei einer positiven Authentifizierung die Verriegelungsvorrichtung (20) ihren Zustand (1, 2) ändert, wobei eine intelligente Sensorik (13) zur Aktivierung der Authentifizierungsabfrage (4) kraftfahrzeugseitig, an der Verriegelungsvorrichtung (20) oder an der Akkumulatoreinheit (30) angeordnet, vorgesehen ist, die mindestens zwei Sensoren (13a, 13b) umfasst,
wobei der erste Sensor (13a) einen horizontalen Detektionsbereich (14a) und der zweite Sensor (13b) einen vertikalen Detektionsbereich (14b) aufweist, wobei die Sensorik (13) mit einem Zugangs- und/oder Fahrberechtigungskontrollsystem (6) verbunden ist und erst nach einer Sensierung einer Person durch den ersten (13a) und den zweiten Sensor (13b) eine Authentifizierungsabfrage (4) zwischen dem ID-Geber (40) und dem Zugangs- und/oder Fahrberechtigungskontrollsystem (6) vorgenommen wird, und bei einer positiven Authentifizierung die Verriegelungsvorrichtung (20) angesteuert wird, um einen Wechsel des Zustandes (1, 2) auszuführen, wobei die Sensorik (13) erst bei einem definierten Bewegungsmuster eine Aktivierung der Authentifizierungsabfrage (4) auslöst wobei die Sensoren als Sensorelektroden ausgebildet werden, wobei die Sensorelektrode als flächenförmiges Element ausgebildet wird, wobei am Fahrzeug vor der Vorderachse, zwischen der Vorderachse und der Hinterachse oder hinter der Hinterachse das flächenförmige Element angeordnet wird, wobei das Kraftfahrzeug (3) eine Aufnahme (8) aufweist, in die die Akkumulatoreinheit (30) einbringbar ist, wobei die Aufnahme (8) außenseitig am Kraftfahrzeug (3) oder innenseitig innerhalb des Kraftfahrzeugs (3) vorgesehen ist, wobei im Verriegelungszustand (2) Arretierungsmittel in die Akkumulatoreinheit (30) eingreifen.

9. Verfahren nach Anspruch 8,
**dadurch gekennzeichnet,**
**dass** über eine bewusste Aktivierung eines Auslöseelementes (5) die Authentifizierungsabfrage (4) aktiviert wird, wobei das Auslöseelement (5) am Elektrofahrzeug (3) oder am ID-Geber (40) angeordnet ist, insbesondere dass die Authentifizierungsabfrage (4) kapazitiv und/oder induktiv erfolgt.

10. Verfahren nach einem der vorhergehenden Ansprüche 8 oder 9,
**dadurch gekennzeichnet,**
**dass** der Ladezustand (SOC) und/oder der Verschleiß (SOH) der Akkumulatoreinheit (30) am Elektrofahrzeug (3) und/oder am ID-Geber (40) für den Benutzer angezeigt wird.

11. Verfahren nach einem der vorhergehenden Ansprüche 8 bis 10,
**dadurch gekennzeichnet,**
**dass** ein im Elektrofahrzeug (3) integriertes Navigationssystem (9) vorhanden ist, wobei eine vom Benutzer geplante Route im Navigationssystem (9) in Bezug auf den Ladezustand der Akkumulatoreinheit (30) überprüft wird, und falls der aktuelle Ladezustand geringer ist als der für die genannte Route benötigte Ladezustand, erfolgt eine entsprechende Benachrichtigung an den Benutzer.

12. Verfahren nach einem der vorhergehenden Ansprüche 8 bis 11, mit dem ein Sicherheitssystem nach einem der Ansprüche 1 bis 7 betreibbar ist.

## Claims

1. Safety system with a locking device (20) for at least one accumulator unit (30) of an electric vehicle (3), wherein
the locking device (20) can be brought into an unlocking state (1) and a locking state (2), in the locking state (2), the accumulator unit (30) is non-detachably arranged on the electric vehicle (3),
in the unlocking state (1) the accumulator unit (30) can be removed from the vehicle (3),
**characterized in that**,
an ID transmitter (40) is provided which is used for authentication query (4) with the electric vehicle (3), and
the locking device (20) is set up to change its state (1, 2) in the event of positive authentication, wherein an intelligent sensor system (13) for activating the authentication query (4) is provided on the motor vehicle side, arranged on the locking device (20) or on the accumulator unit (30), which comprises at least two sensors (13a, 13b), wherein the sensor system (13) is set up to trigger activation of the authentication query (4) in the event of a defined movement pattern which is to be executed by a user,
wherein the first sensor (13a) comprises a horizontal detection area (14a) and the second sensor (13b) comprises a vertical detection area (14b), wherein the sensor system (13) is connected to an access and/or driving authorization control system (6), wherein the sensors (13a, 13b) are designed as sensor electrodes, wherein the sensor electrodes are designed as planar elements, wherein the planar elements can be arranged on the vehicle in front of the front axle, between the front axle and the rear axle, or behind the rear axle, wherein the motor vehicle (3) has a receptacle (8) into which the accumulator unit (30) can be inserted, wherein the receptacle (8) is provided on the outside of the motor vehicle (3) or on the inside inside of the motor vehicle (3), wherein in the locking state (2) locking means engage in the accumulator unit (30).

2. Safety system according to claim 1,
**characterized in that**,
a trigger element (5) is provided which can be activated for authentication query (4), the trigger element (5) being arranged on the electric vehicle or on the ID transmitter (40).

3. Safety system according to claim 1 or 2,
**characterized in that**,
the ID transmitter (40) can be brought into signal connection with a keyless access and/or driving authorization control system (6) of the electric vehicle (3).

4. Safety system according to one of the previous claims,
**characterized in that**,
the accumulator unit (30) is in signal connection with the on-board power supply (7) of the electric vehicle (3) and/or with the ID transmitter (40), so that the state of charge (SOC) and/or the wear (SOH) of the accumulator unit (30) can be displayed on the electric vehicle (3) and/or on the ID transmitter (40) for the user.

5. Safety system according to one of the previous claims,
**characterized in that**,
the locking device (20) has a mechanical, an electromechanical and/or a mechatronic mode of operation.

6. Safety system according to one of the previous claims,
**characterized in that**,
the locking device (20) is arranged on the accumulator unit (30) and/or on the electric vehicle (3).

7. Safety system according to one of the previous claims,
**characterized in that**,
the intelligent sensor system (13) can additionally be used for detecting neighbouring motor vehicles essentially driving to the side of the electric vehicle (3) in order to detect neighbouring motor vehicles in the blind spot.

8. Method for operating a safety system with a locking device (20) for at least one accumulator unit (30) of an electric vehicle (3), wherein
the locking device (20) can be brought into an unlocking state (1) and a locking state (2), in the locking state (2), the accumulator unit (30) is non-detachably arranged on the electric vehicle (3),
in the unlocking state (1) the accumulator unit (30) can be removed from the vehicle (3), **characterized in that**,
an ID transmitter (40) is provided which is used for authentication query (4) with the electric vehicle (3), and
the locking device (20) changes its state (1, 2) only in the event of positive authentication, wherein an intelligent sensor system (13) for activating the authentication query (4) is provided on the motor vehicle side, arranged on the locking device (20) or on the accumulator unit (30), which comprises at least two sensors (13a, 13b),
wherein the first sensor (13a) has a horizontal detection area (14a) and the second sensor (13b) has a vertical detection area (14b), wherein the sensor system (13) is connected to an access and/or driving authorization control system (6) and an authentication query (4) is only carried out between the ID transmitter (40) and the access and/or driving authorization control system (6) after a person has been sensed by the first (13a) and the second sensor (13b), and in the event of positive authentication the locking device (20) is triggered in order to carry out a change of state (1, 2), wherein the sensor system (13) only triggers activation of the authentication query (4) when a defined movement pattern occurs wherein the sensors are designed as sensor electrodes, wherein the sensor electrode is designed as a planar element, wherein the planar element is arranged on the vehicle in front of the front axle, between the front axle and the rear axle or behind the rear axle, wherein the motor vehicle (3) comprises a receptacle (8) into which the accumulator unit (30) can be inserted, wherein the receptacle (8) is provided on the outside of the motor vehicle (3) or on the inside inside of the motor vehicle (3), wherein in the locking state (2), locking means engage in the accumulator unit (30).

9. Method according to claim 8,
**characterized in that**,
the authentication query (4) is activated via a deliberate activation of a triggering element (5), the triggering element (5) being arranged on the electric vehicle (3) or on the ID transmitter (40), in particular **in that** the authentication query (4) is capacitive and/or inductive.

10. Method according to one of the previous claims 8 or 9,
**characterized in that**,
the state of charge (SOC) and/or the wear (SOH) of the accumulator unit (30) on the electric vehicle (3) and/or on the ID transmitter (40) is displayed for the user.

11. Method according to one of the previous claims 8 to 10,
**characterized in that**,
a navigation system (9) integrated in the electric vehicle (3) is comprised, a route planned by the user being checked in the navigation system (9) with respect to the state of charge of the accumulator unit (30), and if the current state of charge is less than the state of charge required for the said route, the user is notified accordingly.

12. A method according to any of the previous claims 8 to 11 by which a safety system according to any of claims 1 to 7 is operable.

## Revendications

1. Système de sécurité avec un dispositif de verrouillage (20) pour au moins une unité d'accumulateur (30) d'un véhicule électrique (3), dans lequel
le dispositif de verrouillage (20) peut être mis dans un état de déverrouillage (1) et dans un état de verrouillage (2),
à l'état de verrouillage (2), l'unité d'accumulateur (30) est disposée de manière non détachable sur le véhicule électrique (3),
à l'état de déverrouillage (1), l'unité d'accumulateur (30) peut être retirée du véhicule (3),
**caractérisé**
**en ce qu'**il est prévu un émetteur d'identification (40) qui est utilisé pour l'interrogation d'authentification (4) avec le véhicule électrique (3), et
le dispositif de verrouillage (20) n'est configuré pour changer d'état (1, 2) qu'en cas d'authentification positive, un système de capteurs intelligent (13) étant prévu du côté du véhicule automobile pour l'activation de l'interrogation d'authentification (4), lequel est disposé sur le dispositif de verrouillage (20) ou sur l'unité d'accumulateur (30) et comprend au moins deux capteurs (13a, 13b), le système de capteurs (13) n'étant configuré pour déclencher l'activation de l'interrogation d'authentification (4) que dans le cas d'un modèle de mouvement défini à exécuter par un utilisateur,
dans lequel le premier capteur (13a) présente une zone de détection horizontale (14a) et le second capteur (13b) une zone de détection verticale (14b), dans lequel le système de capteurs (13) est relié à un système de contrôle d'accès et/ou de contrôle des autorisations de conduite (6), dans lequel les capteurs (13a, 13b) sont conçus comme des électrodes de capteur, dans lequel les électrodes de capteur sont conçues comme des éléments plans, dans lequel les éléments plans peuvent être disposés sur le véhicule devant l'essieu avant, entre l'essieu avant et l'essieu arrière, ou derrière l'essieu arrière, dans lequel le véhicule automobile (3) présente un réceptacle (8) dans lequel l'unité d'accumulateur (30) peut être insérée, dans lequel le réceptacle (8) est prévu sur le côté extérieur du véhicule automobile (3) ou sur le côté intérieur du véhicule automobile (3), dans lequel, à l'état de verrouillage (2), des moyens de verrouillage s'engagent dans l'unité d'accumulateur (30).

2. Système de sécurité selon la revendication 1,
**caractérisé**
**en ce qu'**il est prévu un élément de déclenchement (5) qui peut être activé pour l'interrogation d'authentification (4), l'élément de déclenchement (5) étant disposé sur le véhicule électrique ou sur l'émetteur d'identification (40).

3. Système de sécurité selon la revendication 1 ou 2,
**caractérisé**
**en ce que** l'émetteur d'identification (40) peut être mis en liaison de signal avec un système de contrôle d'accès et/ou de contrôle des autorisations de conduite sans clé (6) du véhicule électrique (3).

4. Système de sécurité selon l'une des revendications précédentes,
**caractérisé**
**en ce que** l'unité d'accumulateur (30) est en liaison de signal avec l'alimentation électrique de bord (7) du véhicule électrique (3) et/ou avec l'émetteur d'identification (40), de sorte que l'état de charge (SOC) et/ou l'usure (SOH) de l'unité d'accumulateur (30) peut être affiché sur le véhicule électrique (3) et/ou sur l'émetteur d'identification (40) pour l'utilisateur.

5. Système de sécurité selon l'une des revendications précédentes,
**caractérisé**
**en ce que** le dispositif de verrouillage (20) a un mode de fonctionnement mécanique, électromécanique et/ou mécatronique.

6. Système de sécurité selon l'une des revendications précédentes,
**caractérisé**
**en ce que** le dispositif de verrouillage (20) est disposé sur l'unité d'accumulateur (30) et/ou sur le véhicule électrique (3).

7. Système de sécurité selon l'une des revendications précédentes,
**caractérisé**
**en ce que** le système de capteurs intelligents (13) peut en outre être utilisé pour détecter les véhicules automobiles voisins qui se trouvent sur le côté du véhicule électrique (3) afin de détecter les véhicules automobiles voisins dans l'angle mort.

8. Procédé pour faire fonctionner un système de sécurité avec un dispositif de verrouillage (20) pour au moins une unité d'accumulateur (30) d'un véhicule électrique (3), dans lequel le dispositif de verrouillage (20) peut être mis dans un état de déverrouillage (1) et dans un état de verrouillage (2),
à l'état de verrouillage (2), l'unité d'accumulateur (30) est disposée de manière non détachable sur le véhicule électrique (3),
à l'état de déverrouillage (1), l'unité d'accumulateur (30) peut être retirée du véhicule (3),
**caractérisé**
**en ce qu'**il est prévu un émetteur d'identification (40) qui est utilisé pour l'interrogation d'authentification (4) avec le véhicule électrique (3), et
le dispositif de verrouillage (20) ne change d'état (1, 2) qu'en cas d'authentification positive, un système de capteurs intelligents (13) pour l'activation de l'interrogation d'authentification (4) étant prévu du côté du véhicule automobile, disposé sur le dispositif de verrouillage (20) ou sur l'unité d'accumulateur (30), qui comprend au moins deux capteurs (13a, 13b),
dans lequel le premier capteur (13a) a une zone de détection horizontale (14a) et le second capteur (13b) a une zone de détection verticale (14b), dans lequel le système de capteurs (13) est relié à un système de contrôle d'accès et/ou de contrôle des autorisations de conduite (6) et une interrogation d'authentification (4) n'est effectuée entre le transmetteur d'identification (40) et le système de contrôle d'accès et/ou de contrôle des autorisations de conduite (6) qu'après qu'une personne a été détectée par le premier (13a) et le second (13b) capteurs, et en cas d'authentification positive, le dispositif de verrouillage (20) est déclenché pour effectuer un changement d'état (1, 2), dans lequel le système de capteurs (13) ne déclenche l'activation de l'interrogation d'authentification (4) que lorsqu'un modèle de mouvement défini se produit, dans lequel les capteurs sont conçus comme des électrodes de capteur, dans lequel l'électrode de capteur est conçue comme un élément plan dans lequel l'élément plan est disposé sur le véhicule devant l'essieu avant, entre l'essieu avant et l'essieu arrière ou derrière l'essieu arrière, dans lequel le véhicule automobile (3) présente un réceptacle (8) dans lequel l'unité d'accumulateur (30) peut être insérée, dans lequel le réceptacle (8) est prévu à l'extérieur du véhicule automobile (3) ou à l'intérieur du véhicule automobile (3), dans lequel à l'état verrouillé (2), des moyens de verrouillage s'engagent dans l'unité d'accumulateur (30).

9. Procédé selon la revendication 8,
**caractérisé**
**en ce que** l'interrogation d'authentification (4) est activée par une activation délibérée d'un élément déclencheur (5), l'élément déclencheur (5) étant disposé sur le véhicule électrique (3) ou sur l'émetteur d'identification (40), en particulier **en ce que** l'interrogation d'authentification (4) est capacitive et/ou inductive.

10. Procédé selon l'une des revendications précédentes 8 ou 9,
**caractérisé**
**en ce que** l'état de charge (SOC) et/ou l'usure (SOH) de l'unité d'accumulateur (30) sur le véhicule électrique (3) et/ou sur l'émetteur ID (40) est affiché pour l'utilisateur.

11. Procédé selon l'une des revendications précédentes 8 à 10,
**caractérisé**
**en ce qu'**un système de navigation (9) intégré au véhicule électrique (3) est présent, un itinéraire prévu par l'utilisateur étant vérifié dans le système de navigation (9) en ce qui concerne l'état de charge de l'unité d'accumulateur(30), et si l'état de charge actuel est inférieur à l'état de charge requis pour ledit itinéraire, l'utilisateur en est informé.

12. Procédé selon l'une des revendications 8 à 11 par laquelle un système de sécurité selon l'une des revendications 1 à 7 est utilisable.
